Europäisches Patentamt

European Patent Office

Office européen des brevets

(19)

(11) Publication number: **0 347 982**

**A1**

(12) # EUROPEAN PATENT APPLICATION

(21) Application number: 89201541.3

(22) Date of filing: 13.06.89

(51) Int. Cl.4: **A01B 39/18 , A01B 35/00 , A01M 21/02 , A01B 39/06 , A01B 39/00**

(30) Priority: 23.06.88 NL 8801607

(43) Date of publication of application:
27.12.89 Bulletin 89/52

(84) Designated Contracting States:
BE DE FR GB LU NL

(71) Applicant: Leijenaar, Sijtze
Kloosterlaan 81
NL-9251 ME Bergum(NL)

(72) Inventor: Leijenaar, Sijtze
Kloosterlaan 81
NL-9251 ME Bergum(NL)

(74) Representative: 't Jong, Bastiaan Jacobus et
al
OCTROOIBUREAU ARNOLD & SIEDSMA
Sweelinckplein 1
NL-2517 GK 's-Gravenhage(NL)

(54) Method and device for controlling unwanted plant growth on a piece of ground.

(57) Method for controlling unwanted plant growth on a piece of ground comprising the mechanical disturbing of the ground. The regular surface agitation of the piece of ground is in order to prevent germinating seeds from taking root.

FIG.1

EP 0 347 982 A1

## METHOD AND DEVICE FOR CONTROLLING UNWANTED PLANT GROWTH ON A PIECE OF GROUND

The invention relates to a method as described in the heading of claim 1.

This method known as "hoeing" is applied along with chemical weed-killers to control weeds, for instance on fields where crops are cultivated.

On the grounds of legal requirements and with respect to the reduction in quality of the ground, the use of chemical weed-killers has to be limited more and more. Hoeing of the ground is however time-consuming and therefore expensive. Attempts have been made to mechanise the hoeing, in order to reduce costs. Mechanical hoeing remains limited however to the soil between the rows in which the crops have been planted. The ground between the plants in each row and especially around each plant, cannot be hoed mechanically, because of the danger of damage to the crop itself. It is the case that during hoeing the ground is mechanically disturbed to a depth of one or several centimeters with the aim of uprooting weeds. The uprooted weeds can then be raked together or, if the weather is dry and warm, the plants can be left where they lie, so that they wither on the spot. Even when hoeing takes place mechanically, an amount of manual labour is still required, so that this method is not entirely satisfactory.

The invention aims to provide a method of the type described in the preamble which lends itself to complete mechanization.

This object is attained with the method according to the invention using the step named in the characteristic of claim 1. An important aspect of the invention is therefore that not already existing unwanted plant growth is removed but that unwanted plant growth is mechanically prevented from developing. Surface agitation of the soil with the purpose of preventing germinating seeds from taking root requires only very small forces, so that this method can also be performed in the direct vicinity of the plant growth that is desired without putting the latter at risk.

A further perfecting of the method according to the invention is characterized in claim 2. During growing weather it is sufficient to agitate the surface of the piece of ground once a day. During dry periods the interval can amount to as much as two weeks.

The invention also relates to and provides a device as specified in claim 3.

Preferred embodiments of the device according to the invention are characterized in the claims 4 to 11.

The embodiment of the slide member as described in claim 7 is particularly simple and efficient. When the step from claim 8 is applied thereby, the lowest portion of the base part acts as a sled, which ensures a good guiding of the slide member over the ground.

The raking elements referred to in claim 11 can be arranged from time to time on one or a number of slide members. As a result the ground surface is automatically raked during operation of the device according to the invention, which results in the relevant piece of ground preserving a well-cared for appearance almost without any human intervention.

The invention will be elucidated further in the following description with reference to the embodiments shown in the figures.

Fig. 1 is a schematic view of a device according to the invention in situation of use.

Fig. 2 shows a detail of the device as according to Fig. 1.

Fig. 3 shows a partial view of the slide member of the device in Fig. 2 along the line III-III.

Fig. 4 shows partially a further development of the device according to the invention.

Fig. 5 shows an alternative embodiment of the device according to the invention.

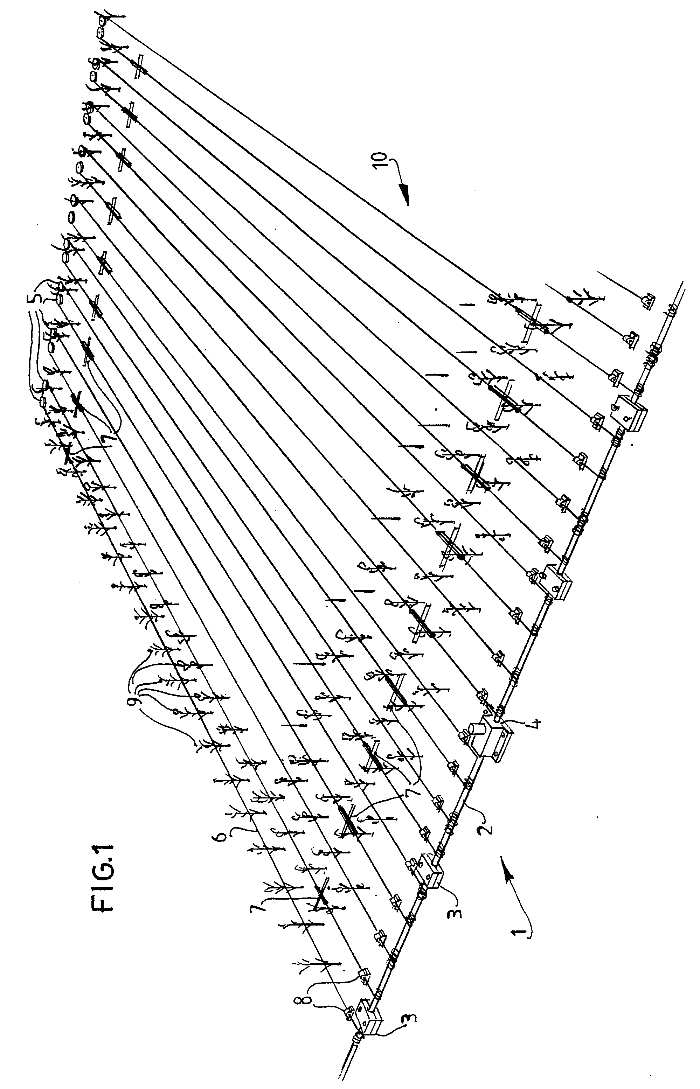

The device 1 according to the invention as shown in fig. 1 serves to keep a field 10 free from weeds. A crop 9 is planted in this field 10 in mutually staggered rows. The crop 9 comprises for instance small trees or vegetables.

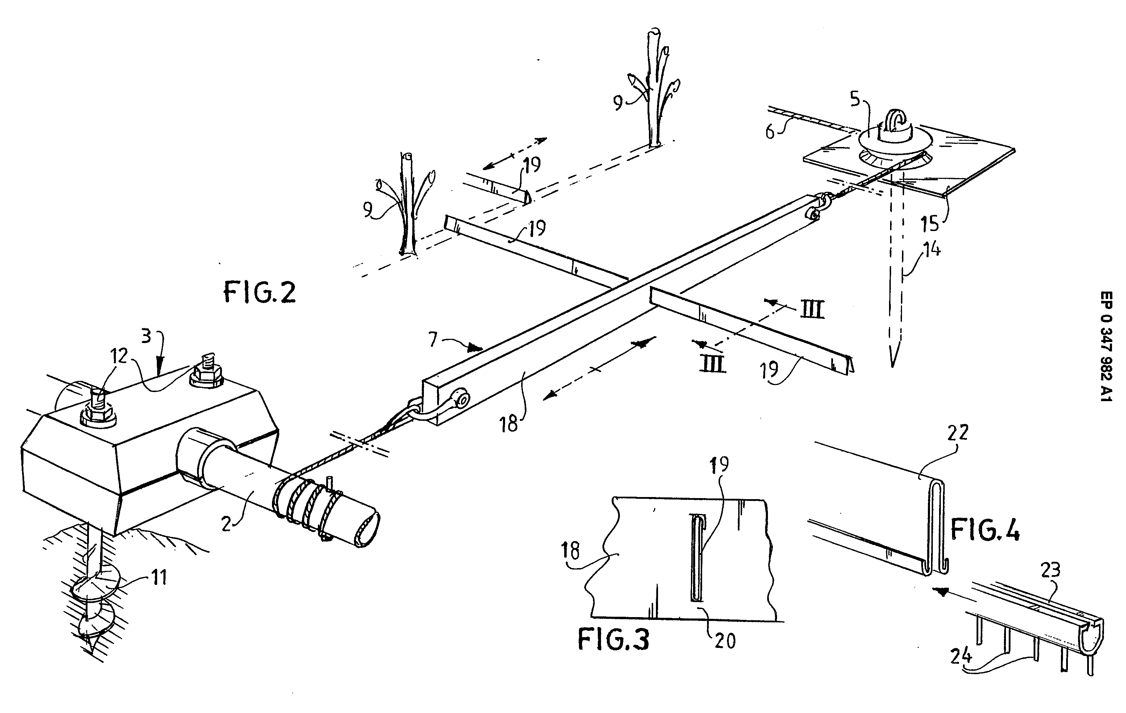

Along one side of the field 10 a shaft 2 is disposed for rotation in bearing blocks 3. The shaft 2 is driven for rotation in the middle of its length by a driving 4 preferably comprising an electro-motor. Arranged on the opposite side of the field 10 is a row of pairs of rollers 5. As shown in fig. 2 each roller 5 is embodied as a cable pulley with a vertical axis of rotation. The roller 5 is anchored into the ground by means of a ground pin 14. A plate 15 is laid beneath the roller 5 in order to prevent the roller 5 working its way in the course of time into the underlying ground.

Trained around each pair of rollers is a cord 6 or similarly flexible member, whereby the ends of this cord 6 are wound around the shaft 2. The one end of the cord is passed round the top of shaft 2, while the other end is passed round the bottom of shaft 2. Thus when the shaft 2 is rotated the one end of the cord is wound up while the other end of the cord is unwound. A slide member 7 is connected to the two portions of each cord 6 extending between the shaft 2 and the relevant pair of rollers 5. As shown in fig. 1 these slide members are joined to these cord portions at locations diagonally opposite to each other. It will be apparent that as a result, when the shaft 2 rotates, the two slide members attached to one cord 6 will move in opposite directions from one side of the field to the other. By switching the direction of movement of the drive device 4 the slide members 7 can subsequently move back again.

In a possible embodiment the tube forming the rotating shaft 2 has for instance a diameter of 20 mm. At a rotation speed of one revolution per second the slide member then reaches a speed of movement of 225 m per hour. Because of this small speed the power of the drive device 4 can be limited. It has been found that even during very good growing weather it is sufficient to agitate the surface of the ground once a day in order to prevent germinating seeds from taking root. The roots of these germinating seeds are denied the opportunity to establish themselves without hindrance in the ground, so that the germinating seed will eventually die.

Fig. 2 shows more clearly how the ground surface is agitated using the embodiment of the device according to the invention described here.

The slide member 7 comprises a strip-like base part 18 placed on its narrow side and having arms 19 placed half way along the broad sides extending transversely on either side. As Fig. 3 shows in detail, the base part 18 protrudes with a lower edge 20 slightly below the underside of the arms 19. This lower edge 20 acts as a sled gripping in the ground and provides a good guiding of the slide member 7, even when the arms 19 protruding on both sides are unevenly loaded.

As Fig. 2 further shows the device according to the invention is employed such that each arm 19 protrudes precisely between a row of plants 9. The end of each arm 19 can thus come in contact with the foot of a plant 9 and as the slide member 7 moves forward it brushes past half the periphery of the plant concerned. The arm 19 of the slide member 7 arranged on the other side of the row of plants brushes past the other side of the foot of the plants, so that the ground around the row of plants is agitated. In this way the ground can be completely covered by the slide members, so that weeds cannot develop anywhere.

The arms 19 of each slide member can take a relatively stiff form. When it comes into contact with the foot of a plant or small tree 9 or with the arm 19 of the slide member on the other side of the row, the slide member 7 can be knocked slightly out of line or deflect sideways. Owing to the tensile force of the cord 6 however the slide member 7 moves directly back again after passing the obstacle, so that the covering of the ground around the crops as described is ensured.

As can further be seen in fig. 2 each bearing block 3, just as the drive device 4, is mounted using anchors 11 screwed into the ground. Each anchor 11 carries on its upper end a screw thread onto which is fitted a nut 12, with which the relevant bearing block 3 is fixed.

Shown in fig. 1 is that each portion of each cord 6 runs past or through a detector 8 placed close to the shaft 2. These detectors 8 are activated if the cord 6 breaks. Some of these detectors 8 can further be used to determine when the slide members 7 have reached their extreme position close to the shaft 2. Through activation of the detector 8 the driving is then switched off. A control device (not further shown) is embodied such that when the device is next switched on the rotation direction of the shaft 2 is reversed, so that the slide members 7 which are situated in their end position close to the shaft 2 are moved back to the other side of the field 10, close to the pairs of guide rollers 5.

This control device can further be provided with a timer which switches on the device regularly, for example daily. As mentioned earlier the interval between two periods of operation can be adapted to the speed of rooting of the germinating seeds, which is determined by the atmosphere at the ground surface. That is, when the weather is dry and hot, the seeds will not or virtually not germinate and take root, so that the intervals between two periods of operation can be prolonged.

When daily inspection of the device is possible, the wire break detection is superfluous. In that case only end switches to switch off the device need be used. For safe operation two pairs of end switches are applied. Since the chance is very small that the two cords co-acting with the end switches will both break at the same time, the chance that the drive device would continue to turn while the slide members had already arrived at their end position is likewise very small.

In practice the length of the shaft 2 can amount to about 50 m on either side of the drive device 4. There is hardly any limit to be placed on the distance between the shaft 2 and the pairs of guide rollers 5. That is, the field lengths of a maximum of about 200 m that occur in practice can be covered without any problem.

Fig. 4 partially shows an arm 22 of a slide member according to a slightly different embodiment of the invention. This arm 22 can co-act with a rake element 23 provided with downward protruding teeth. This rake element 23 can slide onto the bottom of the arm 22. A number of the slide members can be provided with these rake elements 23, so that the relevant piece of ground is automatically raked when the device is in operation. Prior to a following operational cycle of the device the rake elements 23 can be arranged on other slide members. By raking the ground at determined intervals in this manner, the relevant piece of ground 10 remains well loosened and retains a well-cared for appearance.

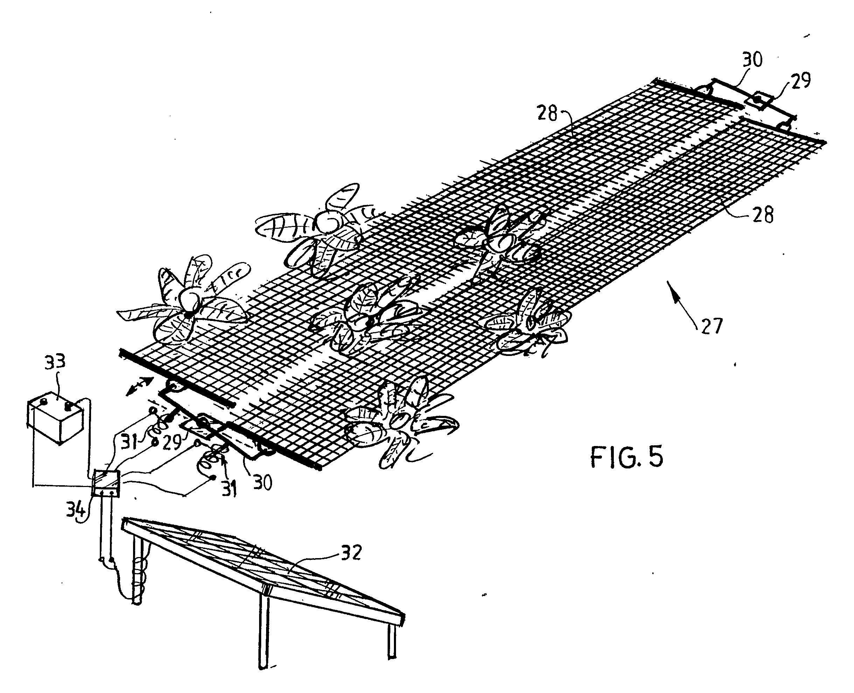

Fig. 5 shows another device according to the invention for controlling unwanted plant growth on a piece of ground. This device 27 consists of two strips of wire mesh 28 laid on the ground. These strips 28 are pivotably connected at their ends to a lever 30 which itself pivots halfway along on a bearing support 29 anchored in the ground, for instance with ground pins. Regular surface agitation of the piece of ground is carried out by moving the strip of wire mesh back and forth over a distance which is at least equal to the length of one mesh in the wire mesh. This movement can be generated using a jack, or as shown schematically in fig. 5, using electromagnets 31. These electromagnets are regularly switched on by a control/power supply device 34, which is provided with energy from a battery 33, which is supplied using a solar panel 32. With an electrical power supply device of this type the device according to the invention can be employed at great distance from the mains electricity supply.

The electromagnets 31 can be controlled such that the strips of wire mesh 28 are moved one stroke length each time the device is set into operation. It is also possible to supply the electromagnets with an alternating voltage, so that the strips of wire mesh 28 are shaken back and forth for some time.

The invention can be applied in many different ways. The device according to the invention in particular can be embodied in many different ways. The only thing of importance thereby is that according to the inventive method the surface of the piece of ground is regularly agitated in order to prevent germinating seeds from taking root. Whether this agitation is performed by moving a slide member over a determined surface as with the above described device 1, or by agitating a relevant surface at one time as with the device 27, is irrelevant. A suitable embodiment can be found as circumstances require.

## Claims

1. Method for controlling unwanted plant growth on a piece of ground comprising the mechanical disturbing of the ground, **characterized by** the regular surface agitation of the piece of ground in order to prevent germinating seeds from taking root.

2. Method as claimed in claim 1, **characterized in that** the piece of ground is agitated at intervals which correspond with the speed of rooting of the germinating seeds determined by the atmosphere at the ground surface.

3. Device for controlling unwanted plant growth on a piece of ground comprising means for mechanical agitation of the ground, **characterized by** at least one slide member in contact over an operational width with the surface of said piece of ground and moveable thereover.

4. Device as claimed in claim 3, **characterized by** mechanical driving means for moving the slide member over the ground surface.

5. Device as claimed in claim 4, **characterized in that** the mechanical driving means comprise a rotatably drivable shaft disposed along one side of a piece of ground, a number of pairs of guide rollers with vertical axes of rotation arranged along an opposite side, and a number of flexible drive members, such as cords, which each extend from the shaft around guide rollers of a pair and then back again to said shaft, whereby the ends of said drive member are wound around said shaft a number of times such that the one end is passed around the top and the other end around the bottom of said shaft, and whereby said slide member is coupled to the portion of said drive member which extends between said shaft and a guide roller.

6. Device as claimed in claim 5, **characterized in that** a slide member is coupled to both portions of the drive member which extend between the shaft and a guide roller at points lying diagonally opposite one another.

7. Device as claimed in any of the claims 3-6, **characterized in that** the slide member comprises a strip-like base part having halfway along its broad side arms protruding on either side in transverse direction.

8. Device as claimed in claim 7, **characterized in that** the base part protrudes for a distance beneath the arms.

9. Device as claimed in any of the claims 3-8, **characterized in that** the drive device comprises an electro-motor with a power supply fed by a solar panel.

10. Device as claimed in any of the claims 3-9, **characterized in that** bearing supports for the shaft and the guide rollers are anchored into the ground with ground pins.

11. Device as claimed in any of the claims 7-10, **characterized by** downward extending rake elements provided with downward protruding teeth and connectable to the arms.

FIG.1

EP 0 347 982 A1

FIG.2

FIG.3

FIG.4

EP 0 347 982 A1

FIG. 5

EP 0 347 982 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-B-1 105 220 (PUTFARKEN)<br>* Column 1, lines 1-4,31-40,51-54; column 2, lines 19-28 *<br>--- | 1-4 | A 01 B 39/18<br>A 01 B 35/00<br>A 01 M 21/02<br>A 01 B 39/06<br>A 01 B 39/00 |
| A | FR-A- 325 523 (LUBIN)<br>--- | | |
| A | FR-A- 907 549 (POTTIER)<br>----- | | |

TECHNICAL FIELDS
SEARCHED (Int. Cl.4)

A 01 B
A 01 M

The present search report has been drawn up for all claims

| Place of search | Date of completion of the search | Examiner |
|---|---|---|
| THE HAGUE | 06-09-1989 | CRAB E.A.C. |

EPO FORM 1503 03.82 (P0401)